# EUROPÄISCHE PATENTSCHRIFT

(11) **EP 0 615 777 B1**
(45) Veröffentlichungstag und Bekanntmachung des Hinweises auf die Patenterteilung: **27.08.1997**
(21) Anmeldenummer: 94101681.8
(22) Anmeldetag: 04.02.1994
(51) Int. Cl.: B01D 53/86, B01D 53/56

(54) **Verfahren zur selektiven katalytischen Reduktion von NOx in wasserdapmf- und sauerstoffhaltigen Gasen**
Process for the selective catalytic NOx reduction in water vapour and oxygen containing gases
Procédé pour la réduction catalytique sélective de NOx des gaz contenant de vapeur d'eau et d'oxygène

(30) Priorität: 17.03.1993 DE 4308542
(43) Veröffentlichungstag der Anmeldung: 21.09.1994
(73) Patentinhaber: MAN Nutzfahrzeuge Aktiengesellschaft, 80976 München (DE)
(72) Erfinder: Eberhard, Jacob Dr. Dipl.-Chem., D-82327 Tutzing (DE); Kreutmair, Josef Dipl.-Ing., D-85276 Pfaffenhofen (DE)

(56) Entgegenhaltungen:
- DE-A- 4 038 054
- US-A- 3 826 810
- US-A- 4 061 597
- PATENT ABSTRACTS OF JAPAN vol. 015, no. 012 (C-0795) 10. Januar 1991 & JP-A-02 261 519 (BABCOCK HITACHI KK) 24. Oktober 1990
- PATENT ABSTRACTS OF JAPAN vol. 015, no. 007 (C-0794) 9. Januar 1991 & JP-A-02 258 017 (BABCOCK HITACHI KK) 18. Oktober 1990

## Beschreibung

Die Erfindung betrifft ein Verfahren zur selektiven katalytischen NOₓ-Reduktion in wasserdampf- und sauerstoffhaltigen Gasen, wie Abgasen unter Anwendung von Harnstoff als Reduktionsmittel und einem NOₓ-Reduktionskatalysator, wobei der Harnstoff vor Kontakt mit dem Reduktionskatalysator an einem Hydrolysekatalysator quantitativ zu NH₃ und CO₂ hydrolysiert wird.

Ein Verfahren dieser Art ist aus der DE 40 38 054 bekannt. Danach wird eine Harnstofflösung aus einem Vorratsbehälter auf einen beheizten Verdampfer/Katalysator fein versprüht und mit den zu reinigenden Gasen durch einen Reduktionskatalysator (SCR-Katalysator) geführt. Hierbei handelt es sich um die Verwendung einer wässrigen Harnstofflösung, die einen relativ hohen Gefrierpunkt (- 11° C) hat und damit bei vielen Einsätzen (z. B. im Winterbetrieb bei Fahrzeugen) eine Beheizung des Vorrats- und Dosiersystems benötigt. Zur Herstellung der wässrigen Harnstofflösung wird zudem salzfreies, deionisiertes Wasser benötigt, damit die Katalysatoren nicht "verkalken", d. h. nicht durch Beläge auf den Katalysatoroberflächen aus Natrium-, Calcium- Magnesiumsalzen deaktiviert werden. Die Anwendung des deionisierten Wassers verteuert die Herstellung der wässrigen Harnstofflösung. Die benötigte Wärmeleistung für Verdampfung und Hydrolyse der wässrigen Harnstoffwasserlösung (32,5 Gew.-%) liegt bei ca. 7.700 kJ/kg Harnstoff (Aufheizung von 25 auf 250° C). Ca. 80% dieser Energie benötigt allein die Verdampfung des Wassers und die Überhitzung des Wasserdampfes auf 250° C. Das Eindüsen einer wässrigen Harnstofflösung in das Abgas führt deshalb zu einer deutlichen Abkühlung des Abgases, die bei kleinen Abgasmassenströmen z. B. 35°C betragen kann. Hierdurch kann die untere Arbeitstemperaturgrenze des SCR-Katalysators unterschritten werden, so daß die NOₓ-Reduktion im Abgas nicht mit dem notwendigen Umsatzgrad abläuft. Ein weiterer Nachteil der wässrigen Lösung ist, daß durch den Wasseranteil sich das bei Fahrzeugen mitzuführende Gewicht des Reduktionsmittels um 67,5% und das Volumen des Vorratsbehälters pro kg Harnstoff von 1,43 l (fester Harnstoff) auf 2,82 l (32,5%ige Harnstofflösung) erhöht.

Der Erfindung liegt die Aufgabe zugrunde, das bekannte Verfahren dahingehend weiter zu entwickeln, daß die Nachteile, die die Anwendung einer wässrigen Harnstofflösung als Reduktionsmittel mit sich bringt, beseitigt werden.

Die Aufgabe wird erfindungsgemäß mit den Merkmalen des Anspruchs 1 gelöst.

Es konnte festgestellt werden, daß ein Aerosol aus Harnstoffstaub oder Harnstoffmikroprills und Luft mit Hilfe von Gasmischern, Verdampfern und Katalysatoren, wie sie beispielsweise aus DE 42 03 807 (veröffentlicht am 12.8.93) bekannt sind, mit ähnlich hohem Wirkungsgrad als Reduktionsmittel zur NOₓ-Verminderung eingesetzt werden kann, wie eine wässrige Harnstofflösung, wobei sich aber die oben aufgeführten Nachteile der Anwendung einer wässrigen Harnstofflösung vollständig vermeiden lassen. Die erfindungsgemäße Verwendung von festem Harnstoff bietet viele Vorteile. Es ist ein uneingeschränkter Winterbetrieb möglich, besonders vorteilhaft bei Fahrzeugen, da keine Zusatzbeheizung von Vorratstank und Dosiersystem notwendig ist.

Außerdem ist eine Halbierung des Volumens des Vorratsbehälters und eine Reduzierung des Gewichtes des Reduktionsmittels um mindestens 67% möglich. Die untere Arbeitstemperaturgrenze des Systems kann um max. 35°C gesenkt werden. Darüber hinaus erreicht man eine Kostenreduzierung des Reduktionsmittels durch deutlich geringere Einsatz-, Herstell- und Transportkosten.

Für den Fahrzeugeinsatz des Systems summieren sich die genannten Vorteile zu einer signifikant besseren Performance des Gesamtsystems. Bei stationärem Einsatz stellen die Vorteile einen technischen Fortschritt dar.

Der Harnstoff wird vorzugsweise in Form von Mikroprills verwendet, die sich mittels Dosiergeräten sehr genau dosieren lassen.

Für eine exakte Dosierung und reibungslose Beschickung der Harnstoffmikroprills ist es notwendig, das Material fließfähig zu halten, Harnstoff ist hygroskopisch und neigt unter Belastung zu kaltem Fließen. Beim Lagern und Fördern des Harnstoffs besteht deshalb die prinzipielle Gefahr des Verbackens und damit von Funktionsstörungen bei der Dosierung.

Aus der JP-A-2 261 519 ist ein Verfahren bekannt, bei dem fester Harnstoff thermisch zerlegt wird und mit dem entstehenden NH₃ Stickoxide aus einem Abgas reduziert werden.

Die Erfindung wird an Hand eines in der Zeichnung schematisch dargestellten Ausführungsbeispieles näher erläutert. Es zeigen:
- Fig. 1: ein Katalysatorsystem
- Fig. 2: ein Dosiersystem für festen Harnstoff.

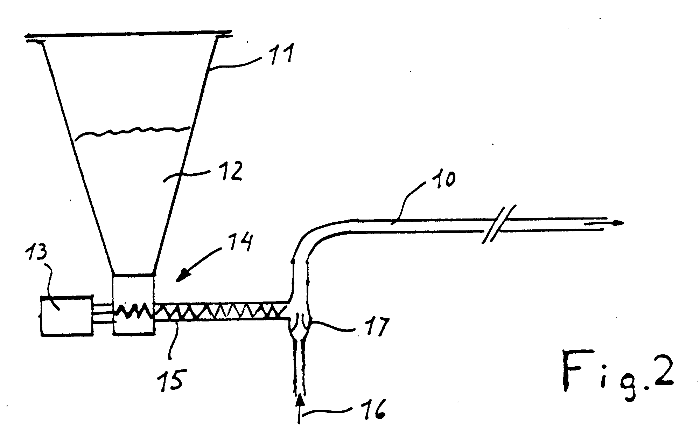

In einem Vorratsbehälter 11 (Fig. 2) ist Harnstoff in Form von Mikroprills 12 enthalten. Der Vorratsbehälter 11 mündet in ein motorbetriebenes (13) Spiralrohr-Präzisions-Dosiergerät 14, dessen Ausgangsrohr 15 senkrecht in eine Förderleitung 10 mündet. Die Förderung von Harnstoffmikroprills erfolgt mit Preßluft 16, die über eine Injektor-Düse 17 vor der Mündung des Ausgangsrohres 15 des Dosiergerätes 14 in die Förderleitung 10 eingeblasen wird und dabei die Mikroprills 12 mitreißt.

Zur Erhaltung der Fließfähigkeit des Harnstoffs befindet sich dieser in einem Plastikbehälter (nicht dargestellt) verpackt im Vorratsbehälter 11. Der Plastikbehälter wird mittels eines, ebenfalls nicht dargestellt, im Auslaufbereich des Vorratsbehälters 11 angeordneten Durchstichmechanismus geöffnet.

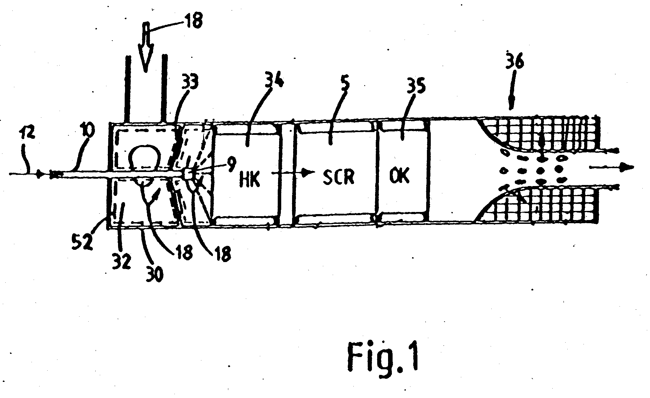

Die Förderleitung 10 mündet in ein in Fig. 1 gezeigtes Katalysatorsystem 30, das aus einer Einlaufkammer 32, einem Hydrolysekatalysator 34, einem Reduktionskatalysator 5, einem Oxidationskatalysator 35 und einem Schallabsorptionsdämpfer 36 besteht.

Die in die Einlaufkammer 32 einmündende Förderleitung 10 hat am Ausgang eine Druckzerstäuberdüse 9. In die Einlaufkammer 32 wird ferner das zu reinigende Gas 18, beispielsweise Abgas eines Dieselmotors, tangential eingeführt. Der dabei hervorgerufene Drall im Abgas wird durch einen Drallkegel 33 verstärkt, der die Einlaufkammer 32 in zwei Räume unterteilt. Das Abgas 18 gelangt durch den Drallkegel 33 in den zweiten Raum, in dem sich die Druckzerstäuberdüse 9 befindet.

Das erfindungsgemäße Verfahren wird an Hand von Ausführungsbeispielen nachfolgend näher erläutert.

### Beispiel 1

Zur Abgaserzeugung dient ein 12 l-Sechszylindermotor mit verbrauchsoptimierter Einstellung und einem Dieselkraftstoff mit einem Schwefelmassenanteil von 0,045%. Der Motor wird im 13-Stufentest nach 88/77/EWG betrieben. Versuchsziel war die Verminderung der limitierten Schadstoffe von 11 g NOₓ/KWh; 3,5 g CO/KWh und 1,1 g HC/KWh um jeweils mindestens 70%. Als Reduktionsmittel für NOₓ wurden Mikroprills aus Harnstoff mit einem Durchmesser von 0,4 - 0,8 mm mit der in Fig. 2 gezeigten Dosiereinrichtung auf ein Katalysatorsystem gemäß Fig. 1 aufgesprüht. Folgende Katalysatoren wurden eingesetzt:
1) Ein Hydrolysekatalysator 34 mit RG max. 90.000 h⁻¹ und Aktivkomponente: Metalloxidabmischung (TiO₂, 110 g/l, Al₂O₃, 30 g/l, SiO₂, 10 g/l) auf einer Metallwabe mit 23 Zellen pro cm² Zellteilung (150 cpsi).
2) Ein Reduktionskatalysator 5 mit RG max. 30.000 h⁻¹ und einer V₂O₅/WO₃/TiO₂-Beschichtung auf einer Metallwabe mit 31 Zellen pro cm² Zellteilung (200 cpsi).
3) Ein Oxidationskatalysator 35, RG max. 90.000 h⁻¹ mit Pt/Al₂O₃ auf einer Metallwabe mit 31 Zellen pro cm² Zellteilung (200 cpsi).

Die Einlaufkammer 32, der Drallkegel 33, die Sprühdüse 9 und die als Emulgierleitung ausgebildete Förderleitung 10 sind in den abgasbeaufschlagten Oberflächen mit einer Metalloxidschicht 52 aus TiO₂/Al₂O₃/SiO₂/ZrO₂ überzogen.

Als Ergebnis der Abgasnachbehandlung wurde gefunden: 3,2 g NO_{x/}KWh (Verminderung um 71%), 0,9 g CO/KWh (74%) und 0,22 g HC/KWh (80%). Zur Partikelmessung wurde ein teflonbeschichteter Glasfaserfilter, durch den jeweils 50 Nl Abgas gepumpt wurde, herangezogen. In einem H₂O/Isopropanol-Extrakt wurde der Filter mit HPLC/UV [Tucker, Bade, Analytical Letters 25 (1992) 2265] Harnstoff und Cyanursäure bestimmt. Ergebnis: Harnstoff- und Cyanursäureschlupf < 1 mg/KWh. Dieser geringe Wert zeigt, daß keine meßbare Erhöhung der Partikelmasse durch das Eindüsen von Harnstoff als Feststoff verursacht wird. Im Bereich der Einlaufkammer 32 und des Drallkegels 33 waren keine Ablagerungen von Harnstoff oder Harnstoffzersetzungsprodukten auffindbar. Die Eindüsung der Harnstoffmikroprills erfolgt oberhalb einer Mindestabgastemperatur von 200° C, mit der für einen NOₓ-Abbau von 71% äquivalenten Harnstoffmenge.

### Vergleichsbeispiel 2

In einem weiteren Versuch wurde in gleicher Weise, wie im Beispiel 1, verfahren, jedoch ohne Beschichtung der Innenseite der Einlaufkammer 32, der Außenseite des Emulgierrohres 10 und der Düse 9 sowie des Drallkegels 33 mit Mischoxiden. Nach 8 h Motorbetriebsdauer im 12-Stufenzyklus wurden lokal starke Korrosionsstellen (zum Teil Lochfraß) im Bereich der Innenwand der Vorkammer 32 festgestellt. Hier zeigt sich die von flüssigem Harnstoff her bekannte Korrosivität. Der eingesetzte Werkstoff für die vorgenannten Bauteile 9, 10, 32, 33 war austenitischer 18/8-Edelstahl.

## Patentansprüche

1. Verfahren zur selektiven katalytischen NOₓ-Reduktion in wasserdampf- und sauerstoffhaltigen Gasen (18) unter Anwendung von Harnstoff (12) als Reduktionsmittel und einem NOₓ-Reduktionskatalysator (5), wobei der Harnstoff (12) vor Kontakt mit dem Reduktionskatalysator (5) an einem Hydrolysekatalysator (34) quantitativ zu NH₃ und CO₂ hydrolysiert wird, dadurch gekennzeichnet, daß Harnstoff (12) als Feststoff in Form von Mikroprills mit einem Durchmesser von 10 - 1000 µm in das Gas (18) eindosiert und direkt auf den Hydrolysekatalysator (34) aufgebracht wird.

## Claims

1. Process for selective catalytic NOₓ reduction in gases (18) containing water vapour and oxygen using urea (12) as the reducing agent and an NOₓ reducing catalytic converter (5) whereby the urea (12) is, prior to contact with the reducing catalytic converter (5), hydrolysed quantitatively to NH₃ and CO₂ at a hydrolysis catalytic converter (34), characterised in that urea (12) is metered into the gas (18) as solid matter in the form of microprills with a diameter of 10 - 1000 µm and applied direct to the hydrolysis catalytic converter (34).

## Revendications

1. Procédé de réduction catalytique sélective de NOₓ dans des gaz (18) contenant de la vapeur d'eau et de l'oxygène, en utilisant de l'urée (12) comme agent réducteur et un catalyseur de réduction NOₓ (5), l'urée (12) étant hydrolysé quantitativement en NH₃ et CO₂ dans un catalyseur d'hydrolyse (34) avant d'être mise en contact avec le catalyseur réducteur (5),
caractérisé en ce que
l'urée (12), dosée dans le gaz (18) sous la forme de microbilles d'un diamètre compris entre 10 et 1000 µm, est appliquée directement sur le catalyseur d'hydrolyse (34).
